(19) Europäisches Patentamt
European Patent Office
Office européen des brevets

(11) **EP 4 274 375 B1**

(12) **EUROPEAN PATENT SPECIFICATION**

(45) Date of publication and mention of the grant of the patent:
**03.06.2026 Bulletin 2026/23**

(21) Application number: **21928172.2**

(22) Date of filing: **09.04.2021**

(51) International Patent Classification (IPC):
*H05B 6/06* (2006.01)    *H05B 6/12* (2006.01)

(52) Cooperative Patent Classification (CPC):
**H05B 6/065; H05B 6/1254; H05B 6/1272;**
**Y02B 40/00**

(86) International application number:
**PCT/KR2021/004467**

(87) International publication number:
**WO 2022/181876 (01.09.2022 Gazette 2022/35)**

(54) **INDUCTION HEATING COOKTOP**

INDUKTIONSKOCHFELD

TABLE DE CUISSON À CHAUFFAGE PAR INDUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2021 KR 20210025777**

(43) Date of publication of application:
**08.11.2023 Bulletin 2023/45**

(60) Divisional application:
**26153131.3 / 4 723 805**

(73) Proprietor: **LG Electronics Inc.**
**Yeongdeungpo-gu**
**Seoul 07336 (KR)**

(72) Inventors:
• **PARK, Kyungho**
  **Seoul 08592 (KR)**
• **KIM, Euisung**
  **Seoul 08592 (KR)**
• **LEE, Jaewoo**
  **Seoul 08592 (KR)**

(74) Representative: **Vossius & Partner**
**Patentanwälte Rechtsanwälte mbB**
**Siebertstraße 3**
**81675 München (DE)**

(56) References cited:
EP-A1- 3 133 899          CN-U- 201 681 717
JP-A- 2007 073 400        JP-A- 2007 250 503
JP-A- 2010 080 359        JP-B2- 5 452 162
KR-A- 20200 073 114       KR-B1- 0 151 289

## Description

### TECHNICAL FIELD

The present disclosure relates to an induction heating cooktop, and more particularly, to an induction heating cooktop having a coil switching structure.

### BACKGROUND ART

Various types of cooking appliances are used to heat food at home or in the restaurant. According to the related art, a gas stove using gas as a fuel has been widely used. However, recently, devices for heating an object to be heated, for example, a cooking vessel such as a pot, have been spread using electricity instead of the gas.

Various types of cooking appliances are used to heat food at home or in the restaurant. According to the related art, a gas stove using gas as a fuel has been widely used. However, recently, devices for heating an object to be heated, for example, a cooking vessel such as a pot, have been spread using electricity instead of the gas.

In the case of such an induction heating method, there is a problem in that output power varies depending on a material of a cooking vessel even when the same current is applied to a coil. Specifically, a non-magnetic vessel has smaller specific resistance in the same operating frequency band due to lower permeability than that of a magnetic vessel, and thus an output of the non-magnetic vessel is less than that of the magnetic vessel.

Thus, a method for improving an output of not only the magnetic vessel but also the non-magnetic vessel is required. Japanese Patent Publication No. 2010-257996, which is a prior art, discloses a structure in which a phase difference of current flowing through a plurality of heating coils is controlled according to a material of a cooking vessel to adjust a load impedance so as to heat both an iron pot and an aluminum pot. Here, the plurality of heating coils are implemented in a structure having different outer diameters or a structure installed in two layers. However, when the plurality of heating coils are implemented in the structure having the different outer diameters, there is a problem in that temperature non-uniformity occurs at a bottom portion of a body to be heated because magnetic flux is not generated in the vicinity of the plurality of coils adjacent to each other. In addition, when the plurality of heating coils are implemented in the two-layer structure, there is a disadvantage in that a size increases. JP 2010 080359 A, EP 3 133 899 A1, JP 5 452162 B2, CN 201 681 717 U and KR 0 151 289 B1 further relate to the prior art.

### DISCLOSURE OF THE INVENTION

### TECHNICAL PROBLEM

The invention is specified by the independent claims. Preferred embodiments are defined in the dependent claims. In the following description, although numerous features may be designated as optional, it is nevertheless acknowledged that all features comprised in the independent claims are not to be read as optional. An object of the present disclosure is to provide an induction heating cooktop capable of heating a cooking vessel made of various materials.

An object of the present disclosure is to provide an induction heating method, in which both a magnetic vessel and a non-magnetic vessel are capable of being heated at a similar level of output.

An object of the present disclosure is to minimize a problem of non-uniform heating of a bottom portion of a body to be heated (hereinafter, referred to as a heated body) and minimize an increase in volume in an induction heating cooktop having a coil switching structure.

### TECHNICAL SOLUTION

The present disclosure provides an induction heating cooktop including a plurality of working coils, wherein the plurality of working coils are disposed in a manner in which the plurality of working coils are alternately wound on the same plane.

The present disclosure provides an induction heating cooktop, in which some or all of a plurality of working coils generate a magnetic field according to types of cooking vessels to heat the cooking vessel with target performance for each type of cooking vessels.

### ADVANTAGEOUS EFFECTS

According to the present disclosure, the current may be selectively supplied to the plurality of working coils according to the type of cooking vessel, and thus, there may be an advantage in maintaining output efficiency for the cooking vessel made of various materials.

According to the present disclosure, since the plurality of working coils are arranged in the manner, in which the coils are alternately wound on the same plane, there may be the advantage in which the bottom surface of the heated body is more uniformly heated, and the plurality of working coils is installed in one layer to minimize the increase in volume of the cooktop.

## BRIEF DESCRIPTION OF THE DRAWINGS

FIG. 1 is a perspective view illustrating a cooktop and a cooking container according to an embodiment of the present disclosure.
FIG. 2 is a cross-sectional view illustrating the cooktop and the cooking container according to an embodiment of the present disclosure.
FIG. 3 is a circuit diagram of the cooktop according to an embodiment of the present disclosure.
FIG. 4 is a view illustrating output characteristics of the cooktop according to an embodiment of the present disclosure.
FIG. 5 is a circuit diagram of a working coil module provided in the cooktop according to an embodiment of the present disclosure.
FIG. 6 is a view illustrating an example of an installation state of the working coil module provided in the cooktop according to an embodiment of the present disclosure.
FIG. 7 is a cross-sectional view of the working coil module and a base according to an embodiment of the present disclosure.
FIG. 8 is a block diagram for explaining an operating method of the cooktop according to an embodiment of the present disclosure.
FIG. 9 is a flowchart illustrating the operating method of the cooktop according to an embodiment of the present disclosure.
FIG. 10 is a view illustrating a structure of ferrite provided in the cooktop according to an embodiment of the present disclosure.

## MODE FOR CARRYING OUT THE INVENTION

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, an induction heating type cooktop and an operation method thereof according to an embodiment of the present disclosure will be described. For convenience of description, the "induction heating type cooktop" is referred to as a "cooktop".

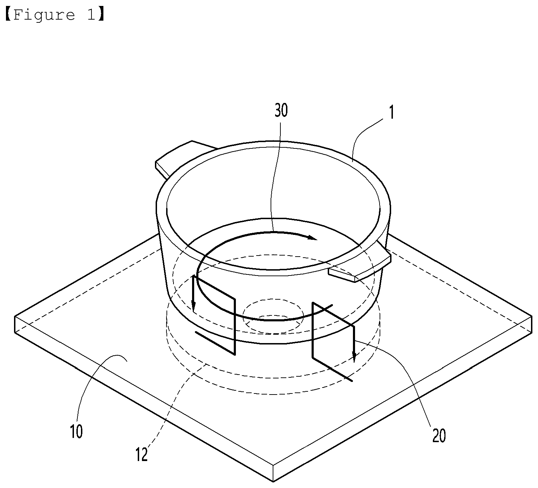

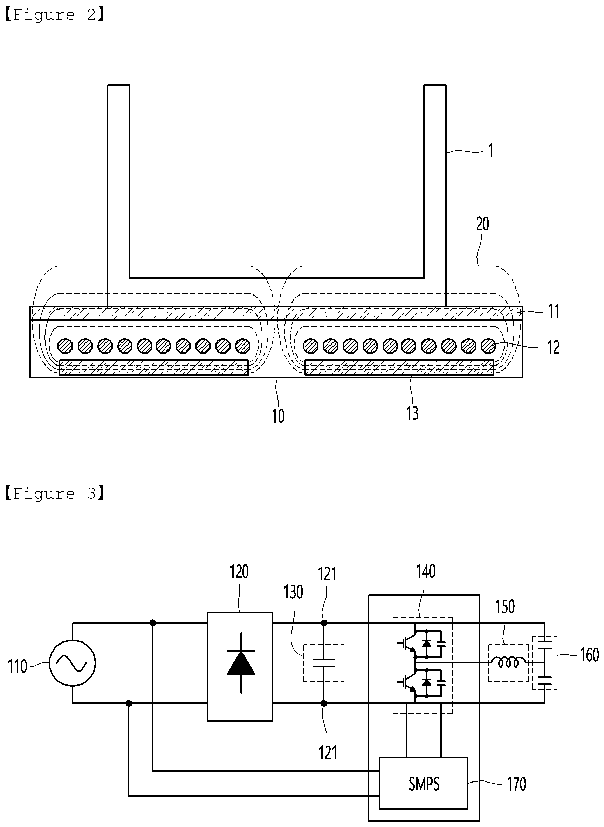

FIG. 1 is a perspective view illustrating a cooktop and a cooking container according to an embodiment of the present disclosure, and FIG. 2 is a cross-sectional view illustrating the cooktop and the cooking container according to an embodiment of the present disclosure.

A cooking vessel 1 may be disposed above the cooktop 10, and the cooktop 10 may heat a cooking vessel 1 disposed thereon.

First, a method for heating the cooking vessel 1 using the cooktop 10 will be described.

As illustrated in FIG. 1, the cooktop 10 may generate a magnetic field 20 so that at least a portion of the magnetic field 20 passes through the cooking vessel 1. Here, if an electrical resistance component is contained in a material of the cooking vessel 1, the magnetic field 20 may induce an eddy current 30 in the cooking vessel 1. Since the eddy current 30 generates heat in the cooking vessel 1 itself, and the heat is conducted or radiated up to the inside of the cooking vessel 1, contents of the cooking vessel 1 may be cooked.

When the material of the cooking vessel 1 does not contain the electrical resistance component, the eddy current 30 does not occur. Thus, in this case, the cooktop 10 may not heat the cooking vessel 1.

As a result, the cooking vessel 1 capable of being heated by the cooktop 10 may be a stainless steel vessel or a metal vessel such as an enamel or cast iron vessel.

Next, a method for generating the magnetic field 20 by the cooktop 10 will be described.

As illustrated in FIG. 2, the cooktop 10 may include at least one of an upper plate glass 11, a working coil 12, or a ferrite 13.

The upper plate glass 11 may support the cooking vessel 1. That is, the cooking vessel 1 may be placed on a top surface of the upper plate glass 11.

In addition, the upper plate glass 11 may be made of ceramic tempered glass obtained by synthesizing various mineral materials. Thus, the upper plate glass 11 may protect the cooktop 10 from an external impact.

In addition, the upper plate glass 11 may prevent foreign substances such as dust from being introduced into the cooktop 10.

The working coil 12 may be disposed below the upper plate glass 11. Current may or may not be supplied to the working coil 12 to generate the magnetic field 20. Specifically, the current may or may not flow through the working coil 12 according to on/off of an internal switching element of the cooktop 10.

When the current flows through the working coil 12, the magnetic field 20 may be generated, and the magnetic field 20 may generate the eddy current 30 by meeting the electrical resistance component contained in the cooking vessel 1. The eddy current may heat the cooking vessel 1, and thus, the contents of the cooking vessel 1 may be cooked.

In addition, heating power of the cooktop 10 may be adjusted according to an amount of current flowing through the working coil 12. As a specific example, as the current flowing through the working coil 12 increases, the magnetic field 20 may be generated more, and thus, since the magnetic field passing through the cooking vessel 1 increases, the heating power of the cooktop 10 may increase.

The ferrite 13 is a component for protecting an internal circuit of the cooktop 10. Specifically, the ferrite 13 serves as a shield to block an influence of the magnetic field 20 generated from the working coil 12 or an electromagnetic field generated from the outside on the internal circuit of the cooktop 10.

For this, the ferrite 13 may be made of a material having very high permeability. The ferrite 13 serves to induce the magnetic field introduced into the cooktop 10 to flow through the ferrite 13 without being radiated. The movement of the magnetic field 20 generated in the working coil 12 by the ferrite 13 may be as illustrated in FIG. 2.

The cooktop 10 may further include components other than the upper glass 11, the working coil 12, and the ferrite 13 described above. For example, the cooktop 10 may further include an insulator (not shown) disposed between the upper plate glass 11 and the working coil 12. That is, the cooktop according to the present disclosure is not limited to the cooktop 10 illustrated in FIG. 2.

FIG. 3 is a circuit diagram of the cooktop according to an embodiment of the present disclosure.

Since the circuit diagram of the cooktop 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 150, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 150 so that high-frequency current flows through the working coil 150. The inverter 140 may include a semiconductor switch, and the semiconductor switch may be an insulated gate bipolar transistor (IGBT) or an SiC device. Since this is merely an example, the embodiment is not limited thereto. The inverter 140 drives the semiconductor switch to allow the high-frequency current to flow in the working coil 150, and thus, high-frequency magnetic fields are generated in the working coil 150.

In the working coil 150, current may or may not flow depending on whether the switching element is driven. When current flows through the working coil 150, magnetic fields are generated. The working coil 150 may heat an cooking appliance by generating the magnetic fields as the current flows.

One side of the working coil 150 is connected to a connection point of the switching element of the inverter 140, and the other side is connected to the resonance capacitor 160.

The switching element is driven by a driver (not shown), and a high-frequency voltage is applied to the working coil 150 while the switching element operates alternately by controlling a switching time output from the driver. In addition, since a turn on/off time of the switching element applied from the driver (not shown) is controlled in a manner that is gradually compensated, the voltage supplied to the working coil 150 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooktop 10 expressed by the circuit diagram illustrated in FIG. 3, a resonance frequency is determined by an inductance value of the working coil 150 and a capacitance value of the resonance capacitor 160. Then, a resonance curve may be formed around the determined resonance frequency, and the resonance curve may represent output power of the cooktop 10 according to a frequency band.

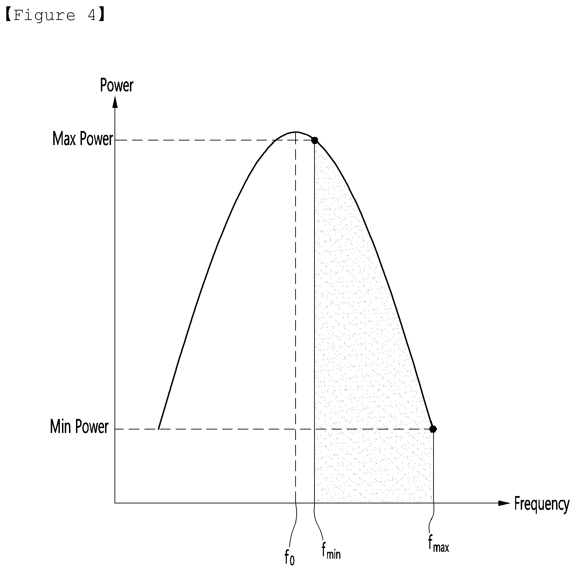

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooktop 10, the Q factor is determined by the inductance value of the working coil 150 included in the cooktop 10 and the capacitance value of the resonant capacitor 160. The resonance curve may be different depending on the Q factor. Thus, the cooktop 10 has different output characteristics according to the inductance value of the working coil 150 and the capacitance value of the resonant capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooktop 10 uses a frequency in a right region based on the resonance frequency f0 of the resonance curve. In addition, the cooktop 1 may have a minimum operating frequency and a maximum operating frequency, which are set in advance.

For example, the cooktop 10 may operate at a frequency corresponding to a range from the maximum operating frequency fmax to the minimum operating frequency fmin. That is, the operating frequency range of the cooktop 10 may be from the maximum operating frequency fmax to the minimum operating frequency fmin.

For example, the maximum operating frequency fmax may be an IGBT maximum switching frequency. The IGBT maximum switching frequency may mean a maximum driving frequency in consideration of a resistance voltage and capacity of the IGBT switching element. For example, the maximum operating frequency fmax may be 75 kHz.

The minimum operating frequency fmin may be about 20 kHz. In this case, since the cooktop 10 does not operate at an audible frequency (about 16 Hz to 20 kHz), noise of the cooktop 10 may be reduced.

Since setting values of the above-described maximum operating frequency fmax and minimum operating frequency fmin are only examples, the embodiment of the present disclosure is not limited thereto.

When receiving a heating command, the cooktop 10 may determine an operating frequency according to a heating power level set by the heating command. Specifically, the cooktop 10 may adjust the output power by decreasing in operating frequency as the set heating power level is higher and increasing in operating frequency as the set heating power level is lower. That is, when receiving the heating command, the cooktop 10 may perform a heating mode in which the cooktop operates in one of the operating frequency ranges according to the set heating power.

Thus, the cooktop 10 may operate at the same operating frequency if the set heating power is the same. However, when the cooking vessel 1 placed on the cooktop 10 is made of different materials, since resistance of the cooking vessel 1 is different, although the set heating power is the same, there is a problem in that a heating time, speed, etc., of the cooking vessel 1 are different because an output is different. In particular, when heating the cooking vessel 1, which is made of a non-magnetic substance, in the case of the cooking vessel 1, resistance is low, and thus the cooktop 1 does not produce a high output.

Thus, the cooktop 10 according to an embodiment of the present disclosure has a coil switching structure, minimizes a problem of non-uniform heating of the cooking vessel 1, and minimizes an increase in volume of the cooktop 10.

For this, the cooktop 10 according to an embodiment of the present disclosure may include a working coil module including a plurality of working coils and configured so that the plurality of working coils are alternately wound.

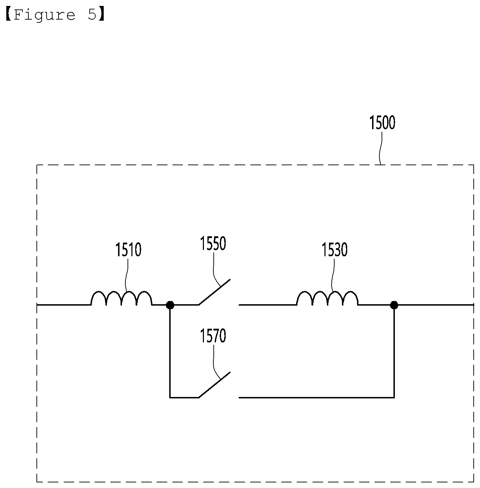

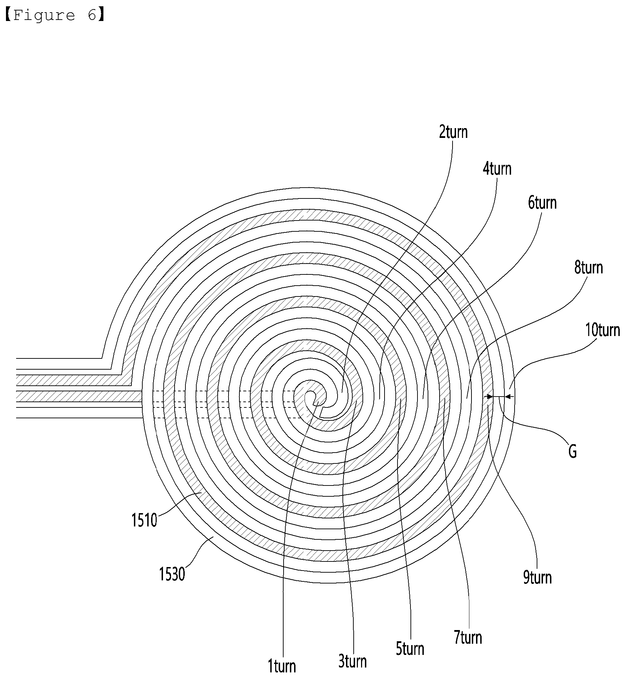

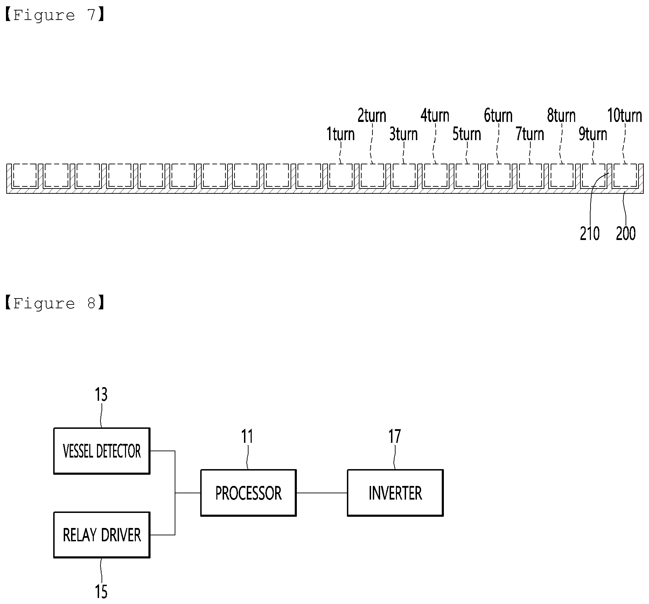

FIG. 5 is a circuit diagram of the working coil module provided in the cooktop according to an embodiment of the present disclosure, FIG. 6 is a view illustrating an example of an installation state of the working coil module provided in the cooktop according to an embodiment of the present disclosure, and FIG. 7 is a cross-sectional view of the working coil module and a base according to an embodiment of the present disclosure.

The cooktop 10 according to an embodiment of the present disclosure may include a working coil module 1500 including a plurality of working coils 150 described in FIG. 3. That is, the cooktop 10 according to an embodiment of the present disclosure is implemented as the circuit diagram illustrated in FIG. 3 and may include the working coil module 1500 illustrated in FIG. 5, instead of the working coil 150 of FIG. 3. The working coil module 1500 is only different from the working coil 150 described in FIG. 3 in that the working coil 150 is provided as a plurality of working coils 150, but since the rest is the same, duplicated descriptions will be omitted.

The working coil module 1500 may generate a magnetic field to heat the cooking vessel 1, and an inverter 140 may be driven so that current flows through the working coil module 1500. The working coil 1500 may include a plurality of working coils 1510 and 1530, and the inverter 140 may supply current to at least a potion or all of the plurality of working coils 1510 and 1530.

For example, the working coil module 1500 may include a first working coil 1510 and a second working coil 1530, but the number of working coils is not limited.

In addition, according to an embodiment of the present disclosure, as illustrated in FIG. 6, the first working coil 1510 may be wound to form a plurality of turns, and the second working coil 1530 may be wound between the turns of the first working coil 1510. That is, the first working coil 1510 and the second working coil 1530 may be alternately wound.

The first working coil 1510 may be formed to be wound n turns, and the second working coil 1530 may be formed to be wound between the first working coils 1510.

For example, the first working coil 1510 may be disposed on odd-numbered turns (1, 3, 5, 7,..., 2n-1 turns), and the second working coil 1530 may be disposed on even-numbered turns (2, 4, 6, 8,..., 2n turns). However, this is exemplary, and the first working coil 1510 may be disposed in even-numbered turns, and the second working coil 1530 may be disposed in odd-numbered turns.

Hereinafter, for convenience of description, it is assumed that the first working coil 1510 is disposed in odd-numbered turns, and the second working coil 1530 is disposed in even-numbered turns.

A difference between an outer diameter of the first working coil 1510 and an outer diameter of the second working coil 1530 may be limited to a predetermined value (e.g., 20 mm) or less.

For example, the difference between the outer diameter of the first working coil 1510 and the outer diameter of the second working coil 1530 may be only 1 turn (+gap), but this is only an example and is not limited thereto. That is, there may be a difference of two or more turns between the outer diameter of the first working coil 1510 and the outer diameter of the second working coil 1530.

As described above, when the difference between the outer diameter of the first working coil 1510 and the outer diameter of the second working coil 1530 is within a predetermined size, a magnetic field region when only one of the first working coil 1510 and the second working coil 1530 generates the magnetic field and a magnetic field region when both the first working coil 1510 and the second working coil 1530 generate the magnetic field are similar to each other to minimize the problem of non-uniform heating of the heated body.

The above-described gap G may be an interval between the turns. The gap G, that is, a distance from each turn of the first working coil 1510 to the turn the adjacent second working coil 1530 may be provided to be greater than or equal to a predetermined threshold value. Each turn of the first working coil 1510 and each turn of the second working coil 1530 may be spaced a predetermined threshold value or more from each other. For example, in the case of the first and second working coils 1510 and 1530 implemented with Litz wire, the gap G may be 1 mm for insulation, but this is merely an example.

As described above, when the outer diameter of the first working coil 1510 and the outer diameter of the second working coil 1530 are limited within a predetermined size, there is an advantage in that the problem of the non-uniform heating of the bottom surface of the cooking vessel 1 is minimized.

The working coil module 1500 may further include a first relay 1550 connecting the first working coil 1510 to the second working coil 1530.

For example, the first relay 1550 may be connected between the last turn (2n-1 turn) of the first working coil 1510 and the first turn (2 turn) of the second working coil 1530, but this is merely an example. That is, on the other hand, the first relay 1550 may be connected between the first turn (1 turn) of the first working coil (1510) and the last turn (2n turn) of the second working coil 1530.

In this specification, for convenience of explanation, it is assumed that the first relay 1550 is connected between the last turn (2n-1 turn) of the first working coil 1510 and the first turn (2 turn) of the second working coil 1530.

When connected in this manner, each of a potential difference between the first turn (1 turn) of the first working coil 1510 and the first turn (2 turn) of the second working coil 1530, a potential difference between the second turn (3 turn) and the second turn (4 turn) of the second working coil 1530,..., a potential difference between the last turn (2n-1 turn) of the first working coil 1510 and the last turn (2n turn) of the second working coil 1530 may be a potential of 2 turn, 4 turn,..., 2n-2 turn. That is, the potential difference between the turns increases toward the outside even though the coils are arranged adjacently at equal intervals. Due to this potential difference, when the first and second working coils 1510 and 1530 are implemented as Litz wires so that each turn of the first and second working coils 1510 and 1530 is insulated from adjacent turns, a diameter and number of each strand may be designed by following Equations.

Required strand diameter < bed depth of copper at (maximum operating frequency + reference frequency) [Equation 1]

(Reference frequency is about 30 to 40 kHz) Required number of strands ≑ Allowable area of driving current / Effective area of 1 strand [Equation 2]

According to an embodiment, a second relay 1570 supplying/cutting off current to the second working coil 1530 according to the on/off of the first relay 1550 may be further provided.

Referring to FIG. 5, the first relay 1550 may be disposed between the first working coil 1510 and the second working coil 1530, and the second relay 1570 may have one end connected between the first working coil 1510 and the first relay 1550 and the other end between the second working coil 1530 and the resonant capacitor 160.

The first relay 1550 may be turned on or off based on the type of cooking vessel 1. The second relay 1550 may also be turned on or off based on the type of cooking vessel 1 and may operate opposite to the first relay 1550.

For example, when the cooking vessel 1 is a magnetic substance, the first relay 1550 may be turned off, and the second relay 1550 may be turned on, and thus, one of the first working coil 1510 and the second working coil 1530 may supply current to only the first working coil 1510 in the case of FIG. 5.

When the cooking vessel 1 is a non-magnetic substance, the first relay 1550 may be turned on, and the second relay 1550 may be turned off, and thus, the current may be applied to both the first working coil 1510 and the second working coil 1530.

That is, the current may be supplied to both the first working coil 1510 and the second working coil 1530 according to the type of the cooking vessel 1, or the current may be supplied to only one of the first working coil 1510 and the second working coil 1530.

The cooktop 10 may further include a base 200 on which the working coil module 1500 is disposed.

The base 200 may include a plurality of partition wall 210, and the working coils 1510 and 1530 may be wound between the plurality of partition walls 210. That is, the plurality of working coils 1510 and 1530 may be wound along the partition walls 210 on the base 200.

The partition wall 210 may space the first working coil 1510 and the second working coil 1530 apart from each other.

The partition wall 210 may vary depending on a material of the base 200. For example, when the base 200 is made of polycarbonate, the partition wall 210 may be selected at a level of 26 kV to 32 kV/mm, but this is only an example and thus is not limited thereto.

A width of the partition wall 210 may be designed based on a potential difference between the 2n-1 turn of the first working coil and the 2n turn of the second working coil. For example, the width of the partition wall 210 may be greater than or equal to 1 mm, but since this is only an example, it is reasonable not to be limited thereto.

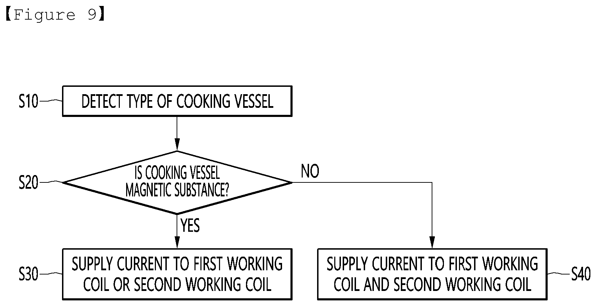

FIG. 8 is a block diagram for explaining an operating method of the cooktop according to an embodiment of the present disclosure, and FIG. 9 is a flowchart illustrating the operating method of the cooktop according to an embodiment of the present disclosure.

The cooktop 10 may include a processor 11, a vessel detector 13, a relay driver 15 and an inverter 17.

The processor 11 may control the vessel detector 13, the relay driver 15 and the inverter 17. Also, the processor 11 may control the components illustrated in FIG. 3.

The vessel detector 13 may detect the type of cooking vessel 1. The vessel detector 13 may determine whether the cooking vessel 1 is made of a magnetic or non-magnetic substance.

The relay driver 15 may control the relays 1550 and 1570. The relay driver 15 may control the relays 1550 and 1570 to be turned on or off according to the determination result of the vessel sensor 13.

The inverter 17 may be the inverter 140 described in FIG. 3. That is, the inverter 17 may be driven so that the current flows through the working coil module 1500.

Referring to FIG. 9, the vessel detector 13 may detect the type of cooking vessel 1 (S10).

The processor 11 may determine whether the cooking vessel 1 is made of the magnetic substance (S20).

The processor 11 may control the relay driver 15 and the inverter 17 to supply the current to the first working coil 1510 or the second working coil 1530 when the cooking vessel 1 is made of a magnetic substance. (S30).

That is, when the cooking vessel 1 is the magnetic substance, the current may be supplied only to either one of the first working coil 1510 and the second working coil 1530.

The processor 11 may control the relay driver 15 and the inverter 17 to supply the current to the first working coil 1510 and the second working coil 1530 when the cooking vessel 1 is not made of the magnetic substance (S40).

That is, when the cooking vessel 1 is made of the non-magnetic substance, the current may be supplied to both the first working coil 1510 and the second working coil 1530.

As described above, when the cooktop 10 includes the working coil module 1500, a horizontal cross-sectional area of the working coil module 1500 may increase slightly. Thus, shielding performance of the ferrite 13 disposed under the working coil module 1500 may be deteriorated, and thus, the ferrite 13 may be provided in a radiation structure.

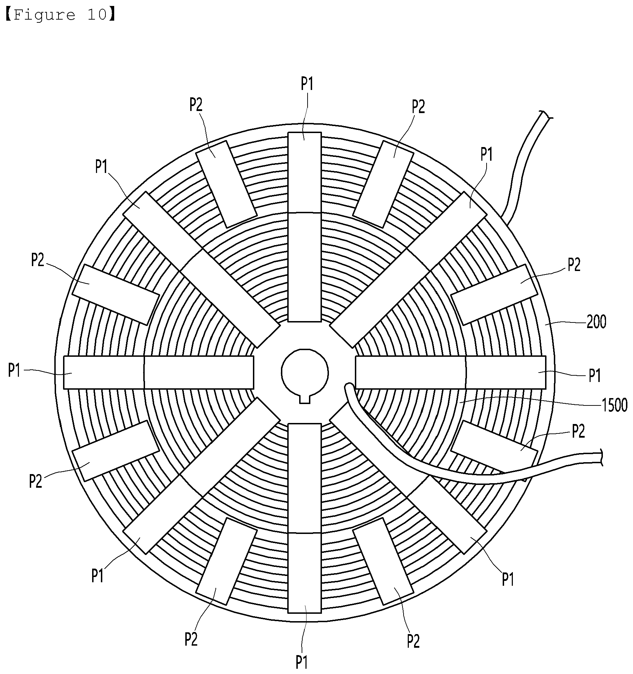

FIG. 10 is a view illustrating a structure of the ferrite provided in the cooktop according to an embodiment of the present disclosure.

FIG. 10 is a view of the working coil module 1500, the base 1500 on which the working coil module 1500, and the ferrite attached to a bottom surface of the base 1500 when viewed upward from a lower side, and for convenience of expansion, it is assumed that the base 1500 is shown with a transparent color.

The ferrite 13 may include a plurality of ferrite elements, and the plurality of ferrite elements may include a plurality of first ferrite elements P1 and a plurality of second ferrite elements P2. Sizes of the first ferrite element P1 and the second ferrite element P2 may be different from each other.

The plurality of first ferrite elements P1 may be disposed to be elongated in a direction toward a central portion of the base 200 and an outer circumference of the base 200, respectively. Each of the plurality of second ferrite elements P2 may be disposed between the first ferrite elements P1, and in this case, each of the plurality of second ferrite elements P2 may be disposed closer to an outer circumference than the central portion of the base 200.

Thus, there may be an advantage of supplementing the shielding performance of the ferrite 13 against the magnetic field generated outside the working coil module 1500.

According to the present disclosure, a target output for each material of each cooking vessel (e.g., an output for a cooking vessel made of STS430 is 3 kW, an output for a cooking vessel made of STS304 is 3.2 kW, and an output for a cooking vessel made of aluminum is 1.8 kW) is satisfied, the cooktop capable of operating at a predetermined level of the operating frequency (about 100 kHz or more) may be provided.

The above-disclosed subject matter is to be considered illustrative, and not restrictive, and the appended claims are intended to cover all such modifications, enhancements, and other embodiments, which fall within the scope of the present disclosure.

Thus, the embodiment of the present disclosure is to be considered illustrative, and not restrictive, and the present disclosure is not limited tc the foregoing embodiment.

Therefore, the scope of the present disclosure is defined not by the detailed description of the invention but by the appended claims, and all differences within the scope will be construed as being included in the present disclosure.

## Claims

1. An induction heating cooktop comprising:

   a working coil module (1500) configured to generate magnetic fields so as to heat the cooking vessel (1);
   an inverter (140) configured to be driven to allow current to flow through the working coil module (1500); and
   a resonance capacitor (160);
   wherein the working coil module (1500) comprises:

   a first working coil (1510) wound to form a plurality of turns;
   a second working coil (1530) ; and
   a first relay (1550) configured to connect the first working coil (1510) to the second working coil (1530);
   **characterised in that**

   the second working coil (1530) is wound between the turns of the first working coil (1510);
   the induction heating cooktop comprises an upper plate glass (11) on which a cooking vessel (1) is placeable; and
   the working coil module (1500) comprises

   a second relay (1570) having one end connected between the first working coil (1510) and the first relay (1550) and the other end connected between the second working coil (1530) and the resonance capacitor (160).

2. The induction heating cooktop according to claim 1, wherein the first working coil (1510) is disposed on odd turns, and the second working coil (1530) is disposed on even turns.

3. The induction heating cooktop according to claim 1 or 2, wherein the first relay (1550) is connected between the last turn of the first working coil (1510) and the first turn of the second working coil (1530).

4. The induction heating cooktop according to claim 3, wherein the first relay (1550) is turned on or off based on types of the cooking vessel (1).

5. The induction heating cooktop according to claim 1, configured such that a current is supplied to both of the first working coil (1510) and the second working coil (1530) or supplied to any one of the first working coil (1510) and the second working coil (1530) according to types of the cooking vessel (1).

6. The induction heating cooktop according to claim 5, wherein, when the cooking vessel (1) is made of a magnetic substance, the current is supplied to only one of the first working coil (1510) and the second working coil (1530), and when the cooking vessel (1) is made of a non-magnetic substance, the current is supplied to both the first and second working coils (1510, 1530).

7. The induction heating cooktop according to claim 1, wherein a difference between an outer diameter of the first working coil (1510) and an outer diameter of the second working coil (1530) is less than a preset value.

8. The induction heating cooktop according to claim 1, wherein each turn of the first working coil (1510) and each turn of the second working coil (1530) are disposed to be spaced a predetermined threshold value or more from each other.

9. A method for operation of an induction heating cooktop according to any one of claims 1 to 8, wherein a current is supplied to both of the first working coil (1510) and the second working coil (1530) or supplied to any one of the first working coil (1510) and the second working coil (1530) according to types of the cooking vessel (1).

**Patentansprüche**

1. Induktionskochfeld, das aufweist:

   ein Arbeitsspulenmodul (1500), das konfiguriert ist, Magnetfelder zu erzeugen, um das Kochgefäß (1) zu erwärmen;
   einen Wechselrichter (140), der konfiguriert ist, angesteuert zu werden, um es zu ermöglichen, dass Strom durch das Arbeitsspulenmodul (1500) fließt; und
   einen Resonanzkondensator (160);
   wobei das Arbeitsspulenmodul (1500) aufweist:

   eine erste Arbeitsspule (1510), die so gewickelt ist, dass sie mehrere Windungen bildet;
   eine zweite Arbeitsspule (1530); und
   ein erstes Relais (1550), das konfiguriert ist, die erste Arbeitsspule (1510) mit der zweiten Arbeitsspule (1530) zu verbinden;

   **dadurch gekennzeichnet, dass**
   die zweite Arbeitsspule (1530) zwischen den Windungen der ersten Arbeitsspule (1510) gewickelt ist;
   das Induktionskochfeld eine obere Glasplatte (11) aufweist, auf die ein Kochgefäß (1) platzierbar ist; und
   das Arbeitsspulenmodul (1500) aufweist
   ein zweites Relais (1570), das mit einem Ende zwischen der ersten Arbeitsspule (1510) und dem ersten Relais (1550) und mit dem anderen Ende zwischen der zweiten Arbeitsspule (1530) und dem Resonanzkondensator (160) angeschlossen ist.

2. Induktionskochfeld nach Anspruch 1, wobei die erste Arbeitsspule (1510) auf ungeraden Windungen angeordnet ist, und
   die zweite Arbeitsspule (1530) auf geraden Windungen angeordnet ist.

3. Induktionskochfeld nach Anspruch 1 oder 2, wobei das erste Relais (1550) zwischen der letzten Windung der ersten Arbeitsspule (1510) und der ersten Windung der zweiten Arbeitsspule (1530) angeschlossen ist.

4. Induktionskochfeld nach Anspruch 3, wobei das erste Relais (1550) basierend auf den Typen des Kochgefäßes (1) ein- oder ausgeschaltet wird.

5. Induktionskochfeld nach Anspruch 1, das so konfiguriert ist, dass ein Strom sowohl an die erste Arbeitsspule (1510) als auch an die zweite Arbeitsspule (1530) oder an eine der ersten Arbeitsspule (1510) und der zweiten Arbeitsspule (1530) gemäß Typen des Kochgefäßes (1) geliefert wird.

6. Induktionskochfeld nach Anspruch 5, wobei, wenn das Kochgefäß (1) aus einer magnetischen Substanz besteht, der Strom nur an eine der ersten Arbeitsspule (1510) und der zweiten Arbeitsspule (1530) geliefert wird, und wenn das Kochgefäß (1) aus einer nichtmagnetischen Substanz besteht, der Strom sowohl an die erste als auch an die zweite Arbeitsspule (1510, 1530) geliefert wird.

7. Induktionskochfeld nach Anspruch 1, wobei eine Differenz zwischen einem Außendurchmesser der ersten Arbeitsspule (1510) und einem Außendurchmesser der zweiten Arbeitsspule (1530) kleiner als ein vorgegebener Wert ist.

8. Induktionskochfeld nach Anspruch 1, wobei jede Windung der ersten Arbeitsspule (1510) und jede Windung der zweiten Arbeitsspule (1530) so angeordnet sind, dass sie einen vorbestimmten Schwellenwert oder mehr voneinander beabstandet sind.

9. Verfahren zum Betreiben eines Induktionskochfeldes nach einem der Ansprüche 1 bis 8, wobei ein Strom sowohl der ersten Arbeitsspule (1510) als auch der zweiten Arbeitsspule (1530) zugeführt wird, oder einer von der ersten Arbeitsspule (1510) und der zweiten Arbeitsspule (1530) gemäß dem Typ des Kochgefäßes (1) zugeführt wird.

**Revendications**

1. Table de cuisson à chauffage par induction, comprenant :

   un module de bobine de travail (1500) prévu pour générer des champs magnétiques afin de chauffer le récipient de cuisson (1) ;
   un onduleur (140) prévu pour être commandé afin de permettre au courant de circuler à travers le module de bobine de travail (1500) ; et
   un condensateur de résonance (160) ;
   où le module de bobine de travail (1500) comprend :

   une première bobine de travail (1510) enroulée de manière à former une pluralité de spires ;
   une deuxième bobine de travail (1530) ; et
   un premier relais (1550) prévu pour connecter la première bobine de travail (1510) à la deuxième bobine de travail (1530) ;

   **caractérisée en ce que**
   la deuxième bobine de travail (1530) est enroulée entre les spires de la première bobine de travail (1510) ;
   ladite table de cuisson à chauffage par induction comprend une plaque de verre supérieure (11) sur laquelle un récipient de cuisson (1) peut être placé ; et
   le module de bobine de travail (1500) comprend :
   un deuxième relais (1570) dont une extrémité est connectée entre la première bobine de travail (1510) et le premier relais (1550), et l'autre extrémité est connectée entre la deuxième bobine de travail (1530) et le condensateur de résonance (160).

2. Table de cuisson à chauffage par induction selon la revendication 1, où la première bobine de travail (1510) est disposée sur des spires impaires, et
   la deuxième bobine de travail (1530) est disposée sur des spires paires.

3. Table de cuisson à chauffage par induction selon la revendication 1 ou la revendication 2, où le premier relais (1550) est connecté entre la dernière spire de la première bobine de travail (1510) et la première spire de la deuxième bobine de travail (1530).

4. Table de cuisson à chauffage par induction selon la revendication 3, où le premier relais (1550) est activé ou désactivé en fonction des types de récipient de cuisson (1).

5. Table de cuisson à chauffage par induction selon la revendication 1, prévue de sorte qu'un courant est fourni à la fois à la première bobine de travail (1510) et à la deuxième bobine de travail (1530) ou fourni à une bobine quelconque entre la première bobine de travail (1510) et la deuxième bobine de travail (1530) en fonction des types de récipients de cuisson (1).

6. Table de cuisson à chauffage par induction selon la revendication 5, où, lorsque le récipient de cuisson (1) est constitué d'une substance magnétique, le courant est fourni à une seule bobine, entre la première bobine de travail (1510) et la deuxième bobine de travail (1530), et,

lorsque le récipient de cuisson (1) est constitué d'une substance non magnétique, le courant est fourni à la fois à la première et à la deuxième bobine de travail (1510, 1530).

7. Table de cuisson à chauffage par induction selon la revendication 1, où la différence entre le diamètre extérieur de la première bobine de travail (1510) et le diamètre extérieur de la deuxième bobine de travail (1530) est inférieure à une valeur prédéfinie.

8. Table de cuisson à chauffage par induction selon la revendication 1, où chaque spire de la première bobine de travail (1510) et chaque spire de la deuxième bobine de travail (1530) sont disposées de manière à être espacées les unes des autres d'une valeur seuil prédéterminée ou plus.

9. Procédé de fonctionnement d'une table de cuisson à chauffage par induction selon l'une des revendications 1 à 8, où un courant est fourni à la fois à la première bobine de travail (1510) et à la deuxième bobine de travail (1530) ou fourni à une bobine quelconque entre la première bobine de travail (1510) et la deuxième bobine de travail (1530) en fonction des types de récipient de cuisson (1).

【Figure 1】

【Figure 2】

【Figure 3】

【Figure 4】

【Figure 5】

【Figure 6】

【Figure 7】

1turn 2turn 3turn 4turn 5turn 6turn 7turn 8turn 9turn 10turn

210 200

【Figure 8】

13

VESSEL DETECTOR

15

RELAY DRIVER

11

PROCESSOR

17

INVERTER

【Figure 9】

S10— | DETECT TYPE OF COOKING VESSEL |

S20— ◇ IS COOKING VESSEL MAGNETIC SUBSTANCE? ◇ — NO

YES

S30— | SUPPLY CURRENT TO FIRST WORKING COIL OR SECOND WORKING COIL |

| SUPPLY CURRENT TO FIRST WORKING COIL AND SECOND WORKING COIL | —S40

【Figure 10】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010257996 A
- JP 2010080359 A
- EP 3133899 A1
- JP 5452162 B
- CN 201681717 U
- KR 0151289 B1